# EUROPÄISCHE PATENTSCHRIFT

(11) **EP 1 068 152 B1**
(45) Veröffentlichungstag und Bekanntmachung des Hinweises auf die Patenterteilung: **18.12.2002**
(21) Anmeldenummer: 99913288.9
(22) Anmeldetag: 22.03.1999
(51) Int. Cl.: C02F 3/10

(54) **AUFWUCHSKÖRPER ZUR IMMOBILISIERUNG VON MIKROORGANISMEN**
GROWTH BODIES FOR IMMOBILIZING MICROORGANISMS
CORPS DE CROISSANCE POUR IMMOBILISER DES MICRO-ORGANISMES

(30) Priorität: 25.03.1998 DE 19813022
(43) Veröffentlichungstag der Anmeldung: 17.01.2001
(73) Patentinhaber: Oeko Systeme Maschinen- und Anlagenbau Gmbh, 04129 Leipzig (DE)
(72) Erfinder: SCHNABEL, Rainer, D-06122 Halle (DE); JANK, Manfred, D-06237 LEUNA (DE); ANTON, Werner, D-06217 Merseburg (DE); OCHMANN, Clemens, D-04177 Leipzig (DE)
(74) Vertreter: Thiel, Christian, Dr. Dipl.-Chem.
(86) Internationale Anmeldenummer: EP9901905
(87) Internationale Veröffentlichungsnummer: WO99048823

(56) Entgegenhaltungen:
- EP-A- 0 447 291
- WO-A-95/08513
- DE-A- 3 410 412
- DE-A- 4 028 312
- DE-A- 4 430 077
- US-A- 4 007 089
- US-A- 5 316 832
- US-A- 5 595 893

## Beschreibung

Die Erfindung betrifft einen Aufwuchskörper zur Immobilisierung von Mikroorganismen, insbesondere zur Verwendung in Abwasser-Reinigungsanlagen, bestehend aus einer Matrix als Trägermaterial, in welche in fein verteilter Form ein biologisch abbaubares Substrat inkorporiert ist.

Bei der Selbstreinigung von Gewässern und Böden spielen Biofilme eine entscheidende Rolle. Durch die besondere Strukturierung der Biofilme finden Abbauspezialisten, die im Regelfall eine relativ geringe Vermehrungsgeschwindigkeit aufweisen, hier günstigere Entwicklungsmöglichkeiten als in Suspensionen. Infolge der Anwesenheit dieser hochspezialisierten Mikroorganismen können auch biologisch schwer abbaubare Substanzen (z. B. Xenobiotika) in Biofilmen eliminiert werden.

Im Prozeß der biologischen Abwasserreinigung kann die Nutzung von Biofilmen zu einer erhöhten Nitrifikationsleistung führen und die Prozeßstabilität bei Belastungsschwankungen erhöhen. Unter Praxisbedingungen konnte der Nachweis erbracht werden, daß mit Hilfe von Biofilmen hinreichende Nitrifikationsleistungen auch bei sehr niedrigen Temperaturen (zwischen 2°C und 5°C) möglich sind. Die Begründung hierfür ist darin zu sehen, daß bei Biofilmen - im Gegensatz zu Suspensionen - auch bei geringen Wachstumsraten kein Ausschwemmen der Mikroorganismen erfolgt.

Der Stofftransport innerhalb eines Biofilms erfolgt diffusionslimitiert, so daß sich bei entsprechenden Abbaugeschwindigkeiten Konzentrationsgradienten ausbilden. Aufgrund der geringen Loslichkeit von Sauerstoff in wäßrigen Medien können sich innerhalb eines Biofilms neben aeroben auch anoxische bzw. anaerobe Zonen ausbilden. Somit wird durch den Einsatz von Biofilmen - im Unterschied zum Belebtschlammverfahren - auch eine simultan ablaufende Nitrifikation und Denitrifikation möglich. Als Steuergrößen für die Prozesse der Ausbildung aerober und anaerober/anoxischer Zonen wird die Sauerstoffkonzentration verwendet. Neue Ergebnisse belegen auch, daß die Populationsdynamik im Biofilm derart beeinflußbar ist, daß die auf die Nitrifikation und Denitrifikation inhibierend wirkenden Faktoren zumindest partiell nivelliert werden.

Um in Abwasserreinigungsanlagen die oben geschilderten nützlichen Eigenschaften von Biofilmen nutzen zu können, ist es notwendig, in der Abwasserreinigungsanlage genügend geeignete Oberflächen zur Verfügung zu stellen, an denen sich diese Biofilme durch Immobilisierung von Mikroorganismen ausbilden können. Für die Herstellung von Aufwuchskörpern zur Immobilisierung von Mikroorganismen eignen sich verschiedene Materialien. Besonders intensiv untersucht wurde die Eignung von Aktivkohle, porösem Glas, porösem Kunststoff, hier insbesondere Polyethylen (PE) oder Polyvinylchlorid (PVC).

Um die Ausbildung von Biofilmen an den Aufwuchskörpern zu beschleunigen, ist es aus der DE-A-34 10 412 bekannt, in eine Matrix aus vorzugsweise PVC ein biologisch abbaubaren Substrat als Depot einzubauen, welches als Wasserstoffdonator und ggf. als Kohlenstoffquelle dient.

Diese vorbekannten Aufwuchskörper mit einem inkorporierten, biologisch abbaubaren Substrat haben jedoch den Nachteil, daß sie nach Verbrauch des Substrates und aufgrund von Mineralisierungsprozessen innerhalb der sich ausbildenden Biofilme alsbald verstopfen und allmählich unbrauchbar werden. Aus diesem Grunde müssen diese Aufwuchskörper in regelmäßigen Abständen erneuert werden. Hierdurch entstehen erhebliche Kosten für die Regenerierung bzw. Entsorgung der gebrauchten Aufwuchskörper.

Weiterhin sind aus US-A-5 316 832 oder DE-A-4028312 Aufwuchskörper bekannt, die aus einer Matrix aus einem biologisch abbaubaren Biopolymer bestehen, in welche ein biologisch abbaubares Substrat inkorporiet ist.

Es ist Aufgabe der Erfindung, die Aufwuchskörper der eingangs genannten Art dahingehend weiterzubilden, daß sie über ihre gesamte Lebensdauer voll funktionsfähig bleiben und Kosten für die teure Regenerierung und/oder Entsorgung entfallen.

Zur Lösung dieser Aufgabe schlägt die Erfindung vor, die Aufwuchskörper, so zu gestalten, wie gemäß Anspruch 1 definiert wird.

Erfindungsgemäß kommen als Biopolymere und Substrate vor allem an und für sich bekannte Materialien zum Einsatz. Entscheidend sind vor allem die Eigenschaften hinsichtlich der Abbaubarkeit. Neben den im folgenden genannten Materialien sind insbesondere auch Biopolymere aus recycleten Kunststoffen bevorzugt.

Bei den Aufwuchskörpern gemäß der Erfindung entsteht in der Phase der Besiedlung mit Mikroorganismen durch Metabolisierung des schneller abbaubaren Substrats im Bereich der von außen zugänglichen Substratteilchen ein Sekundärporensystem, welches allmählich von außen nach innen in den Aufwuchskörper hineinwächst. Dieser Prozeß der Sekundärporenausbildung schreitet insofern langsam fort, als jeweils vor Angriff des nächsten Substratteilchens eine Zwischenwand aus dem langsamer abbaubaren Biopolymer abgebaut werden muß. Durch die auf diese Weise langsam in den Aufwuchskörper hineinwachsenden Biofilme kommt es im Inneren des Aufwuchskörpers durch die sich dort bildende Biomasse zum Aufbau von mechanischen Spannungen, die den Aufwuchskörper aufsprengen. Durch dieses Aufsprengen werden nach und nach frische Trennflächen freigelegt, an denen sich wieder neue Biofilme bilden können. Dieser Prozeß schreitet fort, bis das als Matrix dienende Biopolymer nach der vorgegebenen Nutzungszeit vollständig durch Mikroorganismen metabolisiert ist. Somit entfällt eine Entsorgung oder Regenerierung der Aufwuchskörper.

Besonders günstige Verhältnisse ergeben sich, wenn das schneller abbaubare Substrat eine Standzeit von 20 bis 60 Tagen hat und das langsamer abbaubaren Biopolymer eine Standzeit von 2 bis 10 Jahren hat.

Das schneller abbaubare Substrat besteht zweckmäßig aus Polyhydroxybuttersäure (PHB), Polyhydroxyvaleriansäure (PHV) oder Gemischen derselben (erhältlich als Biopol® von der Fa. Monsanto). PHB und PHV können zugleich als Kohlenstoffquelle dienen und sind aus diesem Grunde insbesondere für die Denitrifikation günstig. Alternativ kann das schneller abbaubare Substrat auch ein Biopolymer auf der Basis von modifizierter Gelatine sein. Hierzu wird Rohgelatine unter Verwendung von Formaldehyd bzw. Glutaraldehyd vernetzt. Dabei kann ein Optimum zwischen H₂O-Aufnahme und biologischer Abbaugeschwindigkeit eingestellt werden.

Gegebenenfalls kann das schneller abbaubare Substrat auch ein Biopolymer auf der Basis von proteinhaltigen Verbindungen aus nachwachsenden Rohstoffen, zum Beispiel Weizenkleber oder Rapsölkuchen enthalten. Solche Biopolymere lassen sich sehr kostengünstig aus Rückständen der Weizenmehlproduktion oder Rapsölherstellung gewinnen.

Als langsamer abbaubares Biopolymer wird vorzugsweise Polycaprolacton verwendet. Dabei handelt es sich um ein kristallines Polymer, welches langsam biologisch abbaubar ist und unter der Bezeichnung TONE® Polymers von Union Carbide vertrieben wird.

Alternativ kann als langsamer abbaubares Biopolymer auch ein Polymer auf der Basis von modifizierter Stärke oder auf der Basis von Zellulose verwendet werden. Auch solche langsam abbaubaren Biopolymere können billig aus verschiedenen Abfallstoffen gewonnen werden. Voraussetzung ist gemäß der Erfindung, daß der biologische Abbau vollständig gemäß DIN V 54900 Teil 2 erfolgt. Als modifizierte Stärke kann beispielsweise das Produkt Sconacell A der Fa. BSL verwandt werden. Es handelt sich dabei um ein biologisch abbaubares Stärkeacetat.

Um die Zusammensetzung der sich ausbildenden Mischpopulation innerhalb eines Biofilmes in der Phase der Besiedelung günstig zu beeinflussen, enthält das schneller abbaubare Substrat zusätzlich einen Stickstoffanteil in Form von Harnstoff, Ammoniumverbindungen und/oder Protein. Durch die Zugabe des Stickstoffanteils zu dem biologisch schneller abbaubaren Substrat wird ein gewisser Selektionsdruck auf die Mikroorganismen erreicht. In der Phase der Besiedelung der Aufwuchskörper durch eine Mischpopulation wird damit den Nitrifikanten ein verbessertes Subtratangebot garantiert. Der Harnstoff wirkt sich auch vorteilhaft auf den gesamten Anfahrvorgang der Anlage aus. So erfolgt die Primärversorgung des mit Belebtschlamm angeimpften Reaktors über den sich aus den Aufwuchskörper auslösenden Stickstoffanteil. Das bedeutet, daß in der Zeit der Primärbesiedelung der Aufwuchskörper der Prozeß der Anheftung der Mikroorganismen nicht durch die Zugabe von frischem Abwasser beeinträchtigt wird.

Der Stickstoffanteil ist zweckmäßig gleichmäßig in dem biologisch schneller abbaubaren Substrat verteilt und beträgt bis zu 4 Masse-%. Bei dem Einsatz von Gelatine bzw. proteinhaltigen Verbindungen als biologisch schneller abbaubarem Substrat entfällt der Zusatz von Harnstoff, da diese Materialien bereits Stickstoff in ausreichendem Maße beinhalten. Insbesondere beträgt der Anteil der Stickstoffverbindungen 2,5 bis 4 Masse-%.

Der Aufwuchskörper gemäß der Erfindung ist als Compound aus zum Zwecke der Herstellung in Schmelze gebrachtem Biopolymerisat und Substratteilchen hergestellt. Auf diese Weise wird erreicht, daß die Substratteilchen fein verteilt und mit dem erforderlichen Abstand zueinander in das als Matrix dienende Biopolymer eingebettet sind. Die Teilchengröße des in dem Compound eingebetteten Substrates beträgt 50 bis 1000µm wobei der Abstand zwischen den Teilchen im Durchschnitt kleiner als der Teilchendurchmesser ist. Bei diesen Abmessungsverhältnissen ergeben sich optimale Wachstumsbedingungen für den langsam in den Aufwuchskörper hineinwachsenden Biofilm und das sich dabei ausbildende Sekundärporensystem.

Die Aufwuchskörper sind u. a. zum Einsatz in Biofilmreaktoren mit getauchtem Trägermaterial und Biofiltern - gemäß DIN EN 12255-7 - Biofilmreaktoren - vorgesehen. Bei einem Einsatz in Wirbelbettreaktoren - wird vorzugsweise eine Körpergröße von 3 bis 5mm verwendet. Bei einem Einsatz in Festbettreaktoren - gemäß VDMA-Einheitsblatt 24 426 Biofilmreaktoren - wird demgegenüber eine Körpergröße von 5 bis 100mm bevorzugt.

Im Vergleich zu konventionellen Aufwuchskörpern, haben die Aufwuchskörper gemäß der Erfindung außerdem noch folgende Vorteile:

Das sich in der Phase der Besiedelung durch Metabolisierung in dem Aufwuchskörper ausbildende Sekundärporensystem schützt die sich darin ausbildenden Mikroorganismen des Biofilms gegen von außen einwirkende Scherkräfte, so daß die Aufwuchskörper gemäß der Erfindung besonders für Wirbelbettreaktoren - gemäß VDMA Einheitsblatt 24 426 Biofilmreaktoren - geeignet sind.

Mit den Aufwuchskörpern gemäß der Erfindung ist es möglich, die Reinigungsschritte Kohlenstoffabbau, Nitrifikation und Denitrifikation gleichzeitig und kontinuierlich in einem stetig und vollständig belüftete und mit Sauerstoff im Überfluß versorgten, einstufigen Reaktionsraum zu realisieren.

Der Vorteil einer prozeßtechnischen gleichzeitigen Denitrifikation liegt zum einen im niedrigeren Energieverbrauch (das Abwasser muß nicht rezirkuliert werden) und zum anderen im höheren Wirkungsgrad (Denitrifikationsleistung bei vorgeschalteter Denitrifikation: max. 76%; Denitrifikationsleistung bei gleichzeitiger Denitrifikation: nahe 100%). Problematisch ist jedoch bei herkömmlichen Anlagen die Dosierung und Steuerung von der Zugabe der externen Kohlenstoffquelle. Diese Probleme werden durch die feste Kohlenstoffquelle in Form von biologisch abbaubaren Polymeren gelöst. Diese Polymere werden von den Mikroorganismen für ihren Stoffwechsel durch Ausscheiden extrazellulärer Enzyme verfügbar gemacht.

Ein Ausführungsbeispiel der Erfindung wird im folgenden anhand einer Zeichnung näher erläutert. Es zeigen:
- Fig. 1:: einen Aufwuchskörper gemäß der Erfindung vor Besiedelung mit Mikroorganismen;
- Fig. 2:: einen Aufwuchskörper gemäß der Erfindung nach der Besiedelung mit Mikroorganismen.

In der Zeichnung ist der Aufwuchskörper in seiner Gesamtheit mit dem Bezugszeichen 1 bezeichnet. Er besteht aus einer Matrix 2, aus einem biologisch langsam abbaubaren Biopolymer, z. B. aus Polycaprolacton, in welches fein verteilt ein biologisch schnell abbaubares Substrat 3, z. B. Polyhydroxybuttersäure (PHB) eingebettet ist. Darüber hinaus enthält das Substrat bis zu 4 Masse-% Harnstoff.

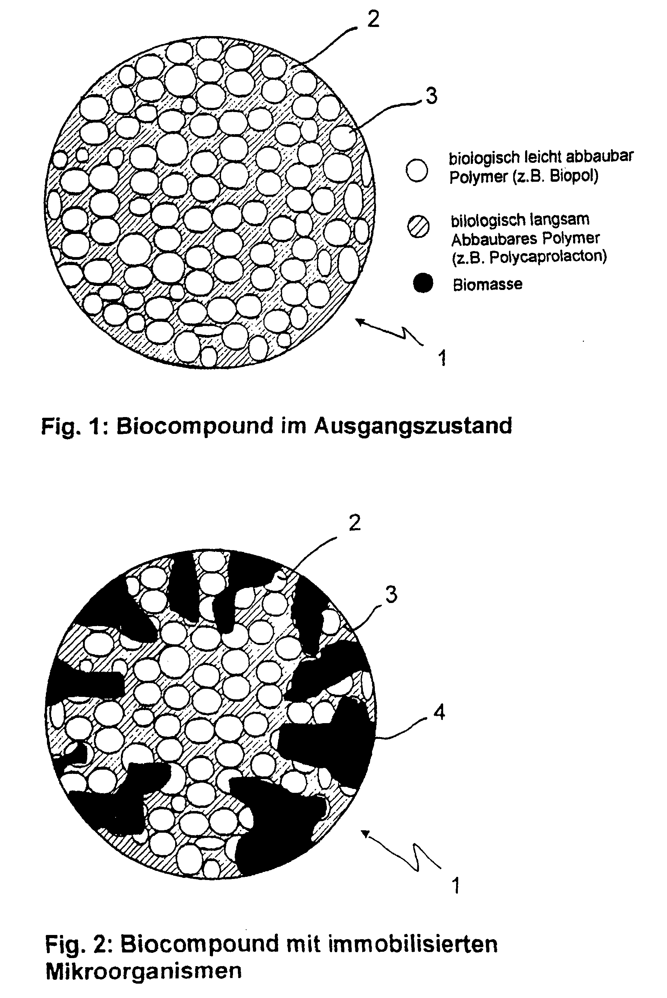

Wie aus den Fig. 1 und 2 ersichtlich ist, besteht das Substrat aus kleinen Teilchen mit einer Teilchengröße von 50 bis 1000µm. Der Abstand zwischen den Teilchen ist im Durchschnitt kleiner als ein Teilchendurchmesser. Insgesamt hat der Aufwuchskörper einen Durchmesser von etwa 4mm. Der Compound-Körper wird dadurch hergestellt, daß in das in Schmelze gebrachte Biopolymer die Substratteilchen eingemischt werden. Dies kann durch Extrudieren, Walzen oder andere Verfahren erfolgen.

Wie in Fig. 2 dargestellt ist, besiedeln die Mikroorganismen zunächst die am Rand freiliegenden Substratteilchen. Von dort wächst der von den Mikroorganismen gebildete Biofilm langsam von Substratteilchen zu Substratteilchen in das Innere des Aufwuchskörpers 1 hinein und stellt auf diese Weise ein langsam wachsendes Sekundärporensystem innerhalb des Aufwuchskörpers her. Da die sich im Inneren des Aufwuchskörpers 1 ausbildende Biomasse in dem Aufwuchskörper zusätzlich mechanische Spannungen erzeugt, wird der Aufwuchskörper 1 nach einiger Zeit aufgesprengt. Dabei werden an den sich ausbildenden Trennflächen jeweils wieder neue Flächen freigelegt, an denen sich neue Biofilme ausbilden können. Mit zunehmender Zerlegung des Aufwuchskörpers vergrößert sich auch dessen spezifische Oberfläche, so daß auch die Metabolisierung des langsam abbaubaren Biopolymers schneller fortschreitet. Am Ende des Prozesses sind sowohl das Substrat 3 als auch die Matrix 2 vollständig metabolisiert und brauchen deshalb nicht entsorgt zu werden.

## Patentansprüche

1. Aufwuchskörper zur Immobilisierung von Mikroorganismen, insbesondere zur Verwendung in Abwasser-Reinigungsanlagen bestehend aus einer Matrix aus einem biologisch abbaubaren Biopolymer, in welche ein biologisch abbaubares Substrat inkorporiert ist,
**dadurch gekennzeichnet,**
**daß** der Aufwuchskörper als Compound aus zum Zwecke der Herstellung in Schmelze gebrachten Biopolymeren und Substratteilchen hergestellt ist, wobei die Matrix erheblich langsamer abbaubar ist, als das Substrat, und daß das Substrat in Form von mit Abstand zueinander angeordneten Teilchen in die Matrix eingebettet ist, wobei die Teilchengröße des in das Compound eingebetteten Substrats 50 bis 1000 µm beträgt und der Abstand zwischen den Teilchen im Durchschnitt kleiner als der Teilchendurchmesser ist, so daß sich durch Abbau des schneller abbaubaren Substrats in dem Aufwuchskörper selbständig ein Porensystem ausbildet, welches von außen nach innen in den Aufwuchskörper hineinwächst.

2. Aufwuchskörper nach Anspruch 1, **dadurch gekennzeichnet, daß** das schneller abbaubare Substrat eine Standzeit von 20 bis 60 Tagen hat, während das langsamer abbaubare Biopolymer eine Standzeit von 2 bis 10 Jahren hat.

3. Aufwuchskörper nach Anspruch 1, **dadurch gekennzeichnet, daß** das schneller abbaubare Substrat aus Polyhydroxybuttersäure (PHB) und/oder Polyhydroxyvaleriansäure besteht.

4. Aufwuchskörper nach Anspruch 1, **dadurch gekennzeichnet, daß** das schneller abbaubare Substrat ein Biopolymer auf der Basis von modifizierter Gelatine ist.

5. Aufwuchskörper nach Anspruch 1, **dadurch gekennzeichnet, daß** das schnell abbaubare Substrat ein Biopolymer auf der Basis von proteinhaltigen Verbindungen aus nachwachsenden Rohstoffen, z. B. Weizenkleber oder Rapsölkuchen enthält.

6. Aufwuchskörper nach einem der Ansprüche 3 bis 5, **dadurch gekennzeichnet, daß** das langsamer abbaubare Biopolymer aus Polycaprolacton besteht.

7. Aufwuchskörper nach einem der Ansprüche 3 bis 5, **dadurch gekennzeichnet, daß** das langsamer abbaubare Biopolymer eine Polymer auf der Basis von Zellulose oder modifizierter Stärke ist.

8. Aufwuchskörper nach Anspruch 1 oder einem der folgenden Ansprüche, **dadurch gekennzeichnet, daß** das schneller abbaubare Substrat zusätzlich einen Stickstoffanteil in Form von Hamstoff, Ammoniumverbindungen und/oder Protein enthält.

9. Aufwuchskörper nach Anspruch 8, **dadurch gekennzeichnet, daß** der Stickstoffanteil in Form von Harnstoff, Ammoniumverbindungen und/oder Protein in dem schnell abbaubaren Substrat bis zu 4 Masse-% beträgt.

10. Aufwuchskörper nach einem der Ansprüche 1 bis 9, **gekennzeichnet durch** eine Körpergröße von 3 bis 5mm.

11. Aufwuchskörper nach einem der Ansprüche 1 bis 9, **gekennzeichnet durch** eine Körpergröße von 5 bis 100mm.

## Claims

1. A culture medium for immobilising micro organisms, in particular for use in sewage clarification plants, consisting of a matrix formed from a biodegradable biopolymer into which a biodegradable substrate is incorporated, **characterized in that** the culture medium is manufactured as a composite of biopolymers and substrate particles brought together in the molten form for manufacture, wherein the matrix degrades much more slowly than the substrate, and **in that** the substrate is in the form of individual particles separated from each other and embedded in the matrix, wherein the particle size of the substrate embedded in the composite is 50 to 1000 µm and the mean distance between the particles is less than the particle diameter, so that degradation of the faster degrading substrate in the culture medium forms a pore system that grows into the culture medium from the outside to the inside.

2. A culture medium according to claim 1, **characterized in that** the faster degrading substrate has a service life of 20 to 60 days while the slower degrading biopolymer has a service life of 2 to 10 years.

3. A culture medium according to claim 1, **characterized in that** the faster degrading substrate is formed from polyhydroxybutyric acid (PHB) and/or polyhydroxyvaleric acid.

4. A culture medium according to claim 1, **characterized in that** the faster degrading substrate is a biopolymer based on modified gelatine.

5. A culture medium according to claim 1, **characterized in that** the fast degrading substrate contains a biopolymer based on protein-containing compounds from sustainable raw materials such as wheat gluten or rape cake.

6. A culture medium according to one of claims 3 to 5, **characterized in that** the slower degrading biopolymer consists of polycaprolactone.

7. A culture medium according to one of claims 3 to 5, **characterized in that** the slower degrading biopolymer is a polymer based on cellulose or modified starch.

8. A culture medium according to claim 1 or one of the subsequent claims, **characterized in that** the faster degrading substrate also contains nitrogen in the form of urea, ammonium compounds and/or protein.

9. A culture medium according to claim 8, **characterized in that** the amount of nitrogen in the form of urea, ammonium compounds and/or protein in the fast degrading substrate is up to 4% by weight.

10. A culture medium according to one of claims I to 9, **characterized in that** the size of the medium is 3 to 5 mm.

11. A culture medium according to one of claims 1 to 9, **characterized in that** the size of the medium is 5 to 100 mm.

## Revendications

1. Corps de croissance pour immobiliser des micro-organismes, en particulier pour une utilisation dans des installations d'épuration d'eaux usées, se composant d'une matrice en un biopolymère biologiquement décomposable dans lequel est incorporé un substrat biologiquement décomposable, **caractérisé en ce que** le corps de croissance est produit en tant que composé avec pour but la production de biopolymères mis en phase fondue et de particules de substrat, où la matrice se décompose considérablement plus lentement que le substrat et **en ce que** le substrat est noyé dans la matrice sous la forme de petites particules agencées à une certaine distance les unes des autres, où la grandeur des petites particules du substrat noyé dans le composé est de 50 à 100 µm et la distance entre les particules en section est plus petite que le diamètre des particules de façon qu'il se forme, par décomposition du substrat se décomposant rapidement dans le corps de croissance, automatiquement, un système de pores qui croît de l'extérieur vers l'intérieur dans le corps de croissance.

2. Corps de croissance selon la revendication 1, **caractérisé en ce que** le substrat se décomposant plus rapidement a une durée de vie de 20 à 60 jours tandis que le biopolymère se décomposant plus lentement a une durée de vie de 2 à 10 ans.

3. Corps de croissance selon la revendication 1, **caractérisé en ce que** le substrat se décomposant plus rapidement se compose d'acide polyhydroxybutyrique (PHB) et/ou d'acide polyhydroxyvalérique.

4. Corps de croissance selon la revendication 1, **caractérisé en ce que** le substrat se décomposant plus rapidement est un biopolymère à base de gélatine modifiée.

5. Corps de croissance selon la revendication 1, **caractérisé en ce que** le substrat se décomposant rapidement contient un polymère à base de composés protéiques formés de matières premières à post-croissance, par exemple des colles de froment ou des gâteaux d'huile de colza.

6. Corps de croissance selon l'une quelconque des revendications 3 à 5, **caractérisé en ce que** le biopolymère se décomposant plus lentement se compose de polycaprolactone.

7. Corps de croissance selon l'une quelconque des revendications 3 à 6, **caractérisé en ce que** le biopolymère se décomposant plus lentement est un polymère à base de cellulose ou d'amidon modifié.

8. Corps de croissance selon la revendication 1 ou l'une quelconque des revendications subséquentes, **caractérisé en ce que** le substrat se décomposant plus rapidement contient de plus une part d'azote sous la forme d'urée, de composés d'ammonium et/ou d'une protéine.

9. Corps de croissance selon la revendication 8, **caractérisé en ce que** la part d'azote sous la forme d'urée, de composés d'ammonium et/ou d'une protéine dans le substrat se décomposant rapidement atteint 4% en poids.

10. Corps de croissance selon l'une quelconque des revendications 1 à 9, **caractérisé par** une grandeur du corps de 3 à 5 mm.

11. Corps de croissance selon l'une quelconque des revendications 1 à 9, **caractérisé par** une grandeur du corps de 5 à 100 mm.
